# EUROPEAN PATENT APPLICATION

(11) **EP 1 900 940 A1**
(43) Date of publication of application: **19.03.2008**
(21) Application number: 06780745.3
(22) Date of filing: 03.07.2006
(51) Int. Cl.: F03G 1/00, B60R 19/40, B60R 21/34

(54) **SLIDE ACTUATOR**

(30) Priority: 01.07.2005 JP 2005193953
(71) Applicant: NHK Spring Company Limited, Yokohama-shi, Kanagawa-ken 236-0004 (JP)
(72) Inventor: MATSUBARA, Kosuke c/o NHK Spring Co., Ltd., Yokohama-shi, Kanagawa 2360004 (JP); FUKUSHIMA, Kiyotaka c/o NHK Spring Co., Ltd., Yokohama-shi, Kanagawa; 2360004 (JP); TAKAHASHI, Hayao c/o NHK Spring Co., Ltd., Yokohama-shi, Kanagawa; 2360004 (JP)
(74) Representative: Goddar, Heinz J.
(86) International application number: PCT/JP2006/313241
(87) International publication number: WO 2007/004618

(57) **Abstract**

When a take-up pulley 102 is rotated forward by driving a motor 84 forwardly, a holding plate 106 pushes a stopper 112 into forward rotation. When a wire 110 is thereby pulled and being wound around the take-up pulley 102, a control pipe 34 and ultimately an inner pipe 28 is received in an outer pipe 16. When the inner pipe 28 is received in the outer pipe 26 and the inner pipe 28 is held by a lock plate 54, the motor 84 is driven reverse to rotate the holding plate 106 reversely, together with the take-up pulley 102, to space away from the stopper 112. In this state, until the stopper 112 comes into contact with the holding plate 106, the wire 110 can move toward its one end and ultimately the inner pipe 28 and the control pipe 34 can move upward.

## Description

### TECHNICAL FIELD

The present invention relates to a slide actuator that the slide member is to be slid by the urging (bias) force of urging means (urging member), such as a spring.

### BACKGROUND ART

In order to protect a pedestrian involved in a collision with a traveling vehicle, there is recently proposed a protector adapted to slide a bumper in a predetermined amount toward the front or raise an engine hood in a predetermined amount by an actuator depending upon a detection result of pedestrian's approach by a forward monitoring instrument or the like.

In such a protector, a slide actuator is applied as the actuator to slide the bumper or raise the engine hood (see patent document 1, as an example).

The slide actuator of this type has a slide member. Usually, the slide member is held in a state being urged by an urging member such as a spring. When the forward monitoring instrument detects that the distance to a pedestrian or the like becomes smaller than a given value, the slide member is released from being held.

The slide member is coupled to the bumper or the engine hood. By sliding the slide member due to the urging force of the urging member, the bumper slides frontward or the engine hood is raised.
Patent Document 1: Japanese Patent Application (Laid-Open) No. 6-64489.

### DISCLOSURE OF THE INVENTION

### PROBLEM TO BE SOLEVED BY THE INVENTION

Meanwhile, the slide member must be returned to the pre-slide state when no pedestrians have contacted the bumper or the engine hood. For this reason, the slide member is coupled to a motor or the like so that when the slide member is slid due to the urging force of an urging member but no pedestrians have contacted the bumper or the engine hood, the slide member is returned to the pre-slide state by the drive force of the motor.

Here, when sliding the slide member due to the urging force of the urging member, the urging force cannot be fully exhibited if the motor output shaft and the slide member remain mechanically coupled together. Consequently, there is devised that a clutch is interposed between the motor output shaft and the slide member so that the motor output shaft and the slide member can be released from mechanical coupling by operating the clutch when the slide member is cause to slide.

However, because such a clutch is complicated in structure, the slide actuator is problematically increased in size and hence in weight.

Taking into account of the foregoing fact, the present invention provides a slide actuator capable of fully exhibiting an urging force of the urging member, for sliding the slide member.

### MEANS FOR SOLVING THE PROBLEM

An aspect of the present invention is a slide actuator including: an outer pipe having a hollow cylindrical form opened at one end; a slide member received in the outer pipe and slidable toward the opening of the outer pipe; an urging member urging the slide member toward the opening of the outer pipe in a state in which the slide member is received in the outer pipe; a holding member that holds the slide member against an urging force of the urging member, by being directly or indirectly engaged with the slide member received in the outer pipe; a first coupling member having one end directly or indirectly coupled to the slide member, and that moves together with the slide member when the slide member slides toward the opening of the outer pipe; a first tow member provided so as to be movable in first and second directions including forward and reverse directions, the first tow member moving in the first direction while engaged with the first coupling member to move, by pulling, the first coupling member toward the other end thereof, and moving in the second direction while the slide member is held by the holding member to allow the first coupling member to move toward the one end thereof by a distance at least corresponding to a movement amount of the first tow member; and a drive section that is configured to be driven forward and in reverse and that is mechanically coupled to the first tow member, to apply a forward drive force and a reverse drive force to the first tow member.

According to the slide actuator of the above aspect, the slide member is held in a holding member while received in the outer pipe. In this state in which the slide member is received in the outer pipe in this manner, the slide member is urged toward one end, i.e. toward the opening, of the outer pipe due to an urging force of the urging member.

Consequently, when the slide member is released from being held by the holding member, the slide member slides toward the one end of the outer pipe due to the urging force of the urging member. Due to this, the slide member protrudes to the outside of the outer pipe from the one end (opening).

Meanwhile, when the drive section is driven in any one of forward and reverse directions (in the first direction) in the state in that the slide member protrudes from the one end of the outer pipe, the first tow member moves in the one of forward and reverse directions (in the first direction). In this state, when the first tow member engages with the first coupling member, the first coupling member is pulled and moved toward the other end thereof by the first tow member.

When the first coupling member is pulled and moved toward the other end thereof, the slide member directly or indirectly coupled to the one end of the first coupling member is pulled inside the outer pipe. Thus, the slide member is received in the outer pipe.

Then, the slide member received in the outer pipe is held by the holding member, when the drive section driven in any other one of forward and reverse directions (in the second direction), the first tow member moves in the other one of forward and reverse directions. Thus, when the first tow member is moved in the other one of forward and reverse rotations, the first coupling member is allowed to move toward its one end by a distance in accordance with at least a movement amount of the first tow member in the other one of forward and reverse directions.

As described above, the first coupling member is coupled, at its one end, directly or indirectly with the slide member. Consequently, in this state, the slide member is allowed to slide by a distance in accordance with a movement amount of the first tow member in the other one of forward and reverse directions. Accordingly, when the slide member in this state is released from being held by the holding member, the slide member is slid by the urging force of the urging member.

Thus, in the slide actuator according to the present invention, the drive section is driven in advance in the other one of forward and reverse directions in the state in which the slide member is held by the holding member. Due to this, when the slide member is released from being held by the holding member, the slide member can slide smoothly and swiftly while fully exhibiting a urging force of the urging member, without being affected by the member constituting the drive section, and even without using a complicated structure such as a clutch.

The side actuator may include: a second coupling member having one end directly or indirectly coupled to the holding member, and that moves toward the other end thereof to move the holding member in a direction toward release of the slide member from being held by the holding member, and a second tow member mechanically coupled to the drive section and movable in first and second directions including forward and reverse directions by a drive force of the drive section, the second tow member moving in the first direction while engaged with the second coupling member to move, by pulling, the second coupling member toward the other end thereof, and moves in the second direction while the slide member is held by the holding member to allow the second coupling member to move toward the one end thereof by a distance at least corresponding to a movement amount of the second tow member.

According to the actuator structured as the above, when the drive section is driven in any one of forward and reverse directions (in the first direction), the second tow member moves in the one of forward and reverse directions (in the first direction). When the second tow member moves in this manner, the second coupling member engaged with the second tow member is pulled and moved toward the other end thereof.

Since the second tow member is coupled, at its one end, directly or indirectly to the holding member, due to the second coupling member pulled toward the other end, the holding member is pulled and the holding member moves in the direction toward release of the slide member from being held. Therefore, the slide member is released from being held by the holding member and the slide member slides due to an urging force of the urging member.

Furthermore, when the drive section in this state is driven in the other one of forward and reverse directions (in the second direction), the second tow member moves in the other one of forward and reverse directions (in the second direction). The second coupling member is allowed to move toward the one end by a distance at least in accordance with the movement amount of the second tow member in the other one of forward and reverse directions. Accordingly, in this state, the holding member can move in the direction toward holding the slide member.

In this manner, in the slide actuator according to the present invention, the holding member can be also controlled by switching the drive direction of the drive section.

The drive direction of the drive section for moving the second tow member in any one of forward and reverse directions may be the same as or opposite to the drive direction of the drive section for moving the first tow member in any one of forward and reverse directions.

In the slide actuator of the above aspect, at least one of the first tow member and the second tow member includes a rotary member that is rotatable about a predetermined axis and rotates both forward and in reverse due to the drive force of the drive section, and the first or second coupling member, corresponding to whichever of the first and second tow members includes the rotary member, is formed in an elongate form having flexibility, and the rotary member winds up, by pulling, the first or second coupling member by rotation of the rotary member in the first direction.

According to the slide actuator of this structure, at least any one of the first and second tow members is structured to include a rotary member. When the rotary member is rotated in any one of forward and reverse directions (in the first direction) due to a drive force acting in any one of forward and reverse directions from the drive section, the first or second coupling member (i.e. the coupling member corresponding to the one of the first and second tow members which including a rotary member) is pulled and being wound around the rotary member.

Here, if the first or second tow member is structured to move in a straight-line form to pull the first or second coupling member, a space that allows the first or second tow member to move in a straight-line form must be secured in advance.

In contrast, in the actuator according to the present invention, because the first or second coupling member is pulled and wound around the rotary member by rotating the rotary member as described above, it is only required to secure a space allowing the rotary member to rotate.

This makes it possible to save the space and reduce the apparatus size as a whole.

The slide actuator may further include an engagement member that is relatively rotatable coaxially to the rotary member and is configured to engage with the first or second coupling member at a side of an outer periphery of the rotary member, the engagement member rotating by being pushed by the rotary member due to the rotation of the rotary member in the first direction, running idle when the rotary member rotates in the second direction, and being allowed to rotate in the second direction in accordance with a rotation amount of the rotary member in the second direction.

According to the slide actuator structured like this, when the rotary member rotates in any one of forward and reverse directions (in the first direction), the engagement member is pressed toward the rotating direction by the rotary member so that the engagement member rotates together with the rotary member. When the engagement member is rotated in this manner, the one of the first and second coupling members which is engaged with the engagement member and is corresponding to the rotary member is pulled by the engagement member and wound around the outer periphery of the rotary member.

In this manner, when the engagement member rotates together with the first or second coupling member and then the rotary member rotates in the other one of forward and backward directions (in the second direction), the engagement member runs idle even if the rotary member rotates, because the engagement member is relatively rotatable coaxially to the rotary member in nature and moreover the engagement member is not pushed toward the other one of forward and reverse directions (in the second direction) by the rotary member.

Further, when the rotary member is rotated in the other one of forward and reverse directions in this manner, the engagement member is allowed to rotate in the other one of forward and reverse directions in accordance with the rotation amount of the rotary member. Consequently, after the first coupling member is pulled by the engagement member for example, the slide member is released from being held and slides, and thereby the engagement member rotates in the other one of forward and reverse directions together with the first coupling member.

Furthermore, after the second coupling member is pulled by the engagement member for example, the holding member moves in a direction toward holding the slide member, and due to the movement of the second coupling member, the engagement member rotates in the other one of forward and reverse directions together with the second coupling member.

In the slide actuator of this structure, the engagement member does not rotate when the rotary member rotates in the other one of forward and reverse directions (in the second direction) after the engagement member rotates together with the rotary member in the one of forward and backward directions (in the first direction). Therefore, even if the rotary member rotates in the other one of forward and reverse directions as described above, the first or second coupling member accompanied with the engagement member is maintained being wound around the rotary member.

In the slide actuator, the rotary member included in the second tow member is coupled coaxially to and integrally with the rotary member included in the first tow member.

In the slide actuator of this structure, the rotary member constituting the second tow member is coupled coaxially to and integrally with the rotary member constituting the first tow member. Therefore, it is possible to further simplify the apparatus structure and reduce the apparatus overall size and the cost.

### EFFECT OF THE INVENTION

As explained above, in the slide actuator according to the present invention, the constituent components of the drive section and the like do not act against an urging force of the urging member when sliding the slide member due to the urging force of the urging member. Therefore, the urging force of the urging member can be fully exhibited with a simple structure.

### BRIEF DESCRIPTION OF DRAWINGS

Fig. 1 is a view showing a structural outline of a slide actuator according to a first embodiment of the present invention.
Fig. 2 is an exploded perspective view showing a structure of a slide mechanism of the slide actuator according to the first embodiment of the invention.
Fig. 3 is a perspective view showing a structure of an essential-part of a drive control mechanism of the slide actuator according to the first embodiment of the invention.
Fig. 4 is a block diagram of the drive control mechanism of the slide actuator according to the first embodiment of the invention.
Fig. 5 is a cross-sectional view showing a structure of the slide mechanism of the slide actuator according to the first embodiment of the invention.
Fig. 6 is a sectional view corresponding to Fig. 5, illustrating a state in which the slide member is slid.
Fig. 7 is a sectional view corresponding to Fig. 5, illustrating a state immediately after a start of receiving of the slide member.
Fig. 8 is a view showing a state in which the structure of the essential-part of the slide actuator drive control mechanism is in a reference position.
Fig. 9 is a view corresponding to Fig. 8, showing the structure of the essential-part of the drive control mechanism when the slide member is slid due to the slide member being released from being held by the holding member.
Fig. 10 is a view corresponding to Fig. 8, showing the structure of the essential-part of the drive control mechanism when the slide member is received.
Fig. 11 is a bottom view showing a positional relationship between a lock piece and the other members.
Fig. 12 is a bottom view corresponding to Fig. 11, showing a state in which the lock piece is rotated in a lock direction.
Fig. 13 is a perspective view showing a structure of an essential-part of a drive control mechanism of a slide actuator according to a second embodiment of the present invention.

### BEST MODES FOR CARRYING OUT THE INVENTION

### <Structure of the First Embodiment>

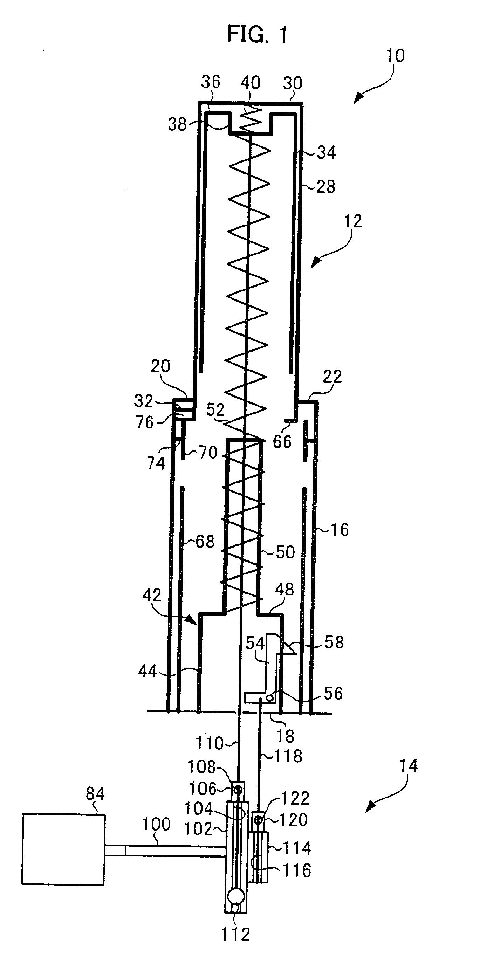

Fig. 1 schematically shows a structure of a slide actuator 10 according to a first embodiment of the present invention. As shown in the figure, slide actuator 10 is constructed with a slide mechanism unit 12 and a drive control unit 14.

### (Structure of Slide Mechanism Unit 12)

Firstly, explanation is made on the slide mechanism unit 12 of the slide actuator 10.

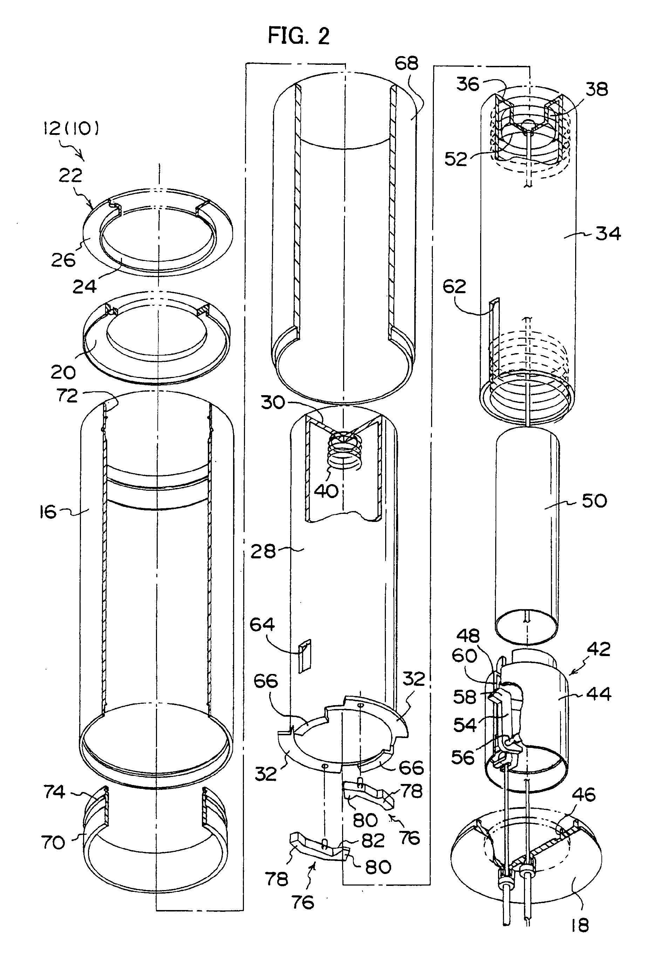

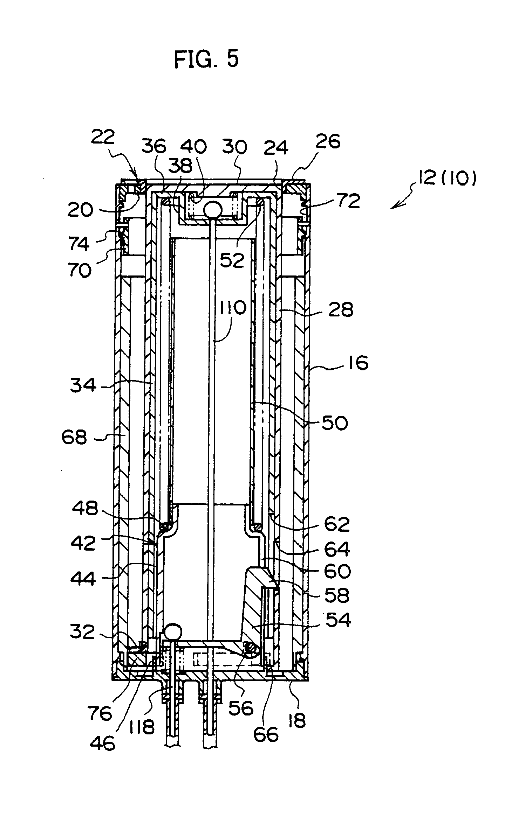

Fig. 2 shows a structure of the slide mechanism unit 12 in an exploded perspective view and Fig. 5 shows the structure of slide mechanism unit 12 in a longitudinal sectional view. As shown in the figures, the slide mechanism unit 12 has an outer pipe 16.

In Fig. 5, the outer pipe 16 is formed in a cylindrical form opened through in the vertical direction. Although the opening direction of the outer pipe 16 is certainly different depending upon the arrangement attitude or the like, in using the slide actuator 10, in the present embodiment, the outer pipe 16 is described as it is opened through in the vertical direction.

A bottom lid 18 is fit in a lower end of the outer pipe 16 so that the outer pipe 16 is closed at its lower end by the bottom lid 18. On the other hand, a fixed stopper 20 is provided at an upper end of the outer pipe 16. The fixed stopper 20 has an outer diameter slightly smaller than an inner diameter of the outer pipe 16 at a vicinity of to the upper end thereof, and is fit coaxially to the outer pipe 16 at a position slightly lower than the upper end of the outer pipe 16.

Further, an upper lid 22 is provided above the fixed stopper 20. The upper lid 22 has a cylindrical portion 24 which the outer diameter thereof is slightly smaller than the inner diameter of the fixed stopper 20. A ring-shaped flange 26 is formed in the cylindrical portion 24 in a manner extending in radially outward direction of cylindrical portion 24 from an upper end of the cylindrical portion 24.

The upper lid 22 is fixed in the outer pipe 16 in the state in which the cylindrical portion 24 thereof is fit in the fixed stopper 20 to the position that a lower surface of the flange 26 abuts an upper surface of the fixed stopper 20.

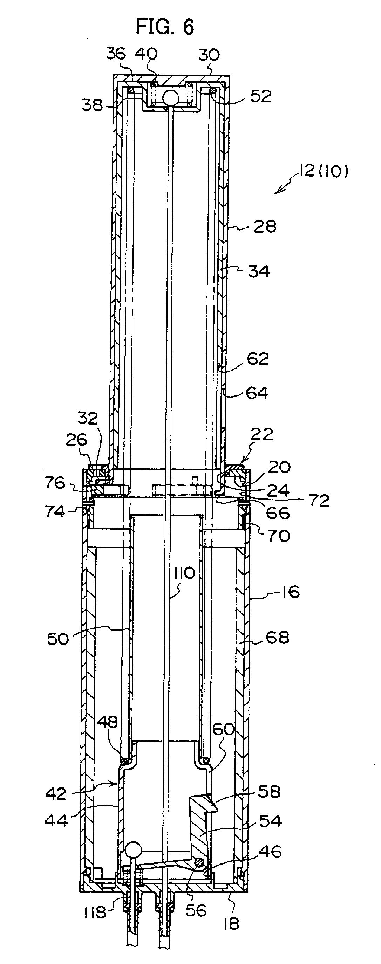

An inner pipe 28, serving as a slide member, is provided inside the outer pipe 16. The inner pipe 28 is formed in a cylindrical form having a base closed at its upper end by an upper base 30 and having an opening at its lower end. The inner pipe 28 has an outer diameter slightly smaller than the inner diameter of the cylindrical portion 24 of the upper lid 22. As shown in Fig. 6, the inner pipe 28 is allowed to pass through the cylindrical portion 24 and protrude toward the outside (toward the upper direction) of the outer pipe 16 by sliding inside the outer pipe 16 upwardly.

As shown in Fig. 2, a pair of flanges 32 extends in radially outward direction of the inner pipe 28 from the lower end of the inner pipe 28. The flanges 32 are formed opposite with each other around the axis of the inner pipe 28.

The flanges 32 face to the fixed stopper 20 in the axial direction (vertical direction) of the inner pipe 28. When the inner pipe 28 slides up by a certain amount, the flanges 32 abut the fixed stopper 20 and further sliding of the inner pipe 28 is restricted.

Further, a control pipe 34 is provided inside the inner pipe 28. The control pipe 34 is formed in a circular cylindrical form having an outer diameter negligibly smaller than the inner diameter of the inner pipe 28, which is closed at its upper end by an upper base 36.

A cylindrical member 38 having a circular cylindrical form and having an outer diameter sufficiently smaller than the inner diameter of the control pipe 34 is provided inside the control pipe 34. The cylindrical member 38 is in a cylindrical form opened to the upper and having a bottom, in which the bottom is continuous to an edge of a circular hole formed coaxial to the control pipe 34 in the upper base 36.

A compression coil spring 40 is accommodated in the cylindrical member 38. One end (lower end) of the compression coil spring 40 contacts with the bottom of the cylindrical member 38 and the other end (upper end) thereof contacts with the upper base 30, so that the compression coil spring 40 urges the inner pipe 28 in a direction separate the upper base 30 away from the cylindrical member 38 in the axial direction of the inner pipe 28 and the control pipe 34.

Further, a support cylinder 42 is provided inside the control pipe 34. The support cylinder 42 has a main body 44 that has an outer diameter sufficiently smaller than the inner diameter of the control pipe 34 and is arranged coaxial to the control pipe 34. The main body 44 is formed in a cylindrical form having a base and is opened at its lower end, and at the lower end, a fit portion 46 formed in the bottom lid 18 enters therein in order to support the main body 44.

A support 50 is formed continuous from a ring-shaped upper base 48 which is formed in the main body 44. The support 50 is formed in a circular cylindrical form having a base and closed at its upper end, and the outer diameter thereof is sufficiently smaller than the outer diameter of the main body 44. A compression coil spring 52 is provided as an urging member around the support 50.

When the shape of the compression coil spring 52 is regarded as a circular cylinder, the compression coil spring 52 has an inner diameter slightly greater than the outer diameter of the support 50 and smaller than the outer diameter of the main body 44. One end (the lower end) of the compression coil spring 52 is in contact with the upper base 48 of the main body 44 in the state in which the support 50 is placed inside the compression coil spring 52.

In this manner, the compression coil spring 52 is prevented from buckling by placing, inside the compression coil spring 52, the cylindrical support 50 slightly smaller than the inner diameter of the compression coil spring 52. The other end (upper end) of the compression coil spring 52 is in contact with the upper base 36 of the control pipe 34, and thereby urging the lower end of the control pipe 34 in a direction separating away from the bottom lid 18, i.e., urging the control pipe 34 upwardly.

By upwardly sliding the control pipe 34, due to the urging force of the compression coil spring 52 being applied, the inner pipe 28 is pushed and moved upward by the control pipe 34 so that the inner pipe 28 can pass through the cylindrical portion 24 and protrude to the outside (the upper side) of the outer pipe 16.

Here, a lock plate 54 is provided as a holding member inside the support cylinder 42. The lock plate 54 partially passes through and enters inside the fit portion 46. A shaft 56 is bridged inside the fit portion 46 a corresponding to the portion of the lock plate 54 where it enters inside the fit portion 46.

The shaft 56 has its axis extending in a direction orthogonal to the axis of the support cylinder 42. and passes through and supports the lock plate 54. The lock plate 54 supported by the shaft 56 is allowed to swing such that its tip displaces in radially inward and outward directions with respect to the support cylinder 42. Furthermore, the lock plate 54 is urged in radially outward direction with respect to the support cylinder 42 by an urging force of an urging member, such as a not-shown torsion coil spring.

Further, a lock claw 58 is formed at the tip of the lock plate 54. Corresponding to the lock claw 58, a cutout 60 is formed in the support cylinder 42. When the lock plate 54 rotates so as to displace the lock claw 58 outward with respect to the support cylinder 42, the lock claw 58 passes through the cutout 60 and protrudes outward with respect to the support cylinder 42.

Furthermore, a cutout 62 is formed in the control pipe 34 and a lock hole 64 is formed in the inner pipe 28, corresponding to the lock claw 58 protruding outward of the support cylinder 42. The lock claw 58, protruding outward of the support cylinder 42, may pass through both of the cutout 62 and the lock hole 64.

Differently from the cutout 62, the lock hole 64 is merely opened in radial direction of the inner pipe 28 and is not opened at the lower end of the inner pipe 28. Accordingly, in the state in which the lock claw 58 passes through the lock hole 64, the lock claw 58 interferes with the inner periphery of the lock hole 64 and thereby restricts the inner pipe 28 from sliding upward.

Further, abutment portions 66 are formed at the lower end of the control pipe 34 corresponding to the lock claw 58. The abutment portion 66 faces to a slant surface formed in an upper end of the lock claw 58 in the axial direction of the control pipe 34. When the control pipe 34 moves down, the abutment portion 66 abuts the slant surface of the lock claw 58, and thereby rotates the lock plate 54 in a direction about the shaft 56 against the urging force of the urging member urging the lock plate 54.

Here, a guide pipe 68 is provided inside the outer pipe 16. The guide pipe 68 has an outer diameter slightly smaller than the inner diameter of the outer pipe 16 and an inner diameter slightly greater than a dimension from an outer periphery of one of the flanges 32 to an outer periphery of the other flange 32 of the inner pipe 28, along a radial direction of the inner pipe 28.

The guide pipe 68 is formed in a cylindrical form opened at both ends thereof, and the lower end is fit with and fixed to the bottom lid 18. An interference cylinder 70 is provided above the guide pipe 68. The interference cylinder 70 is formed in a cylindrical shape having an outer diameter slightly smaller than the inner diameter of the outer pipe 16 and an inner diameter slightly greater than the inner diameter of the guide pipe 68.

In a certain range from the upper end to the lower of the outer pipe 16, corresponding to the interference cylinder 70, a thin-wall portion 72 is formed in the outer pipe 16 which the thickness is smaller than that of the other portion. Further, in an outer periphery of the interference cylinder 70, a ring-shaped interference portion 74 having an outer diameter slightly smaller than the inner diameter of the outer pipe 16 in its thin-wall portion 72 and the outer diameter greater than the inner diameter of the outer pipe 16 in a portion other than the thin-wall portion 72, is formed.

Although the interference cylinder 70 is slidable downwardly by being guided by the outer pipe 16, when the interference portion 74 reaches the boundary between the thin-wall portion 72 and the portion other than the thin-wall portion 72, the interference portion 74 basically cannot slide further downward to the lower portion of the outer pipe 16. However, when the downward load acting to the interference cylinder 70 exceeds a given magnitude, the interference cylinder 70 can move down until the lower end of the interference cylinder 70 abuts the upper end of the guide pipe 68, while the interference portion 74 elastically deforming the portion of the outer pipe 16 lower than the thin-wall portion 72.

Meanwhile, a pair of lock pieces 76 is provided at the flanges 32. The lock pieces 76 are attached to the flanges 32 so as to be rotatable about the axial direction (the vertical direction) of the inner pipe 28. When the inner pipe 28 slides vertically, the lock pieces 76 also move together. The lock pieces 76 are urged in a lock direction, which is one of the rotating directions about the rotation axis thereof, due to an urging member such as a torsion coil spring.

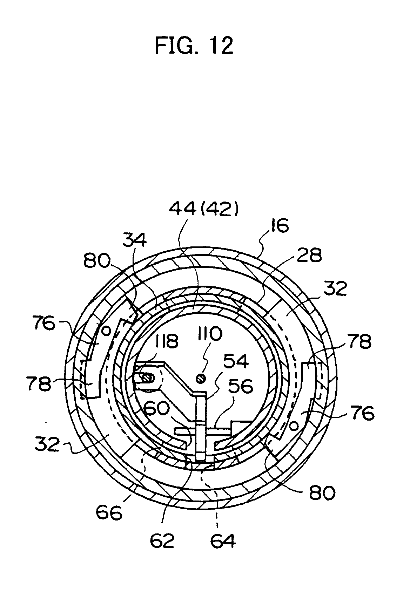

The lock piece 76 is provided with an interference piece 78 at one end thereof with respect to the rotation center. In the state in which the inner pipe 28 is protruding upward relative to the outer pipe 16, when the lock piece 76 rotates in the lock direction as shown in Fig. 12, the interference piece 78 partially protrudes outward of the flange 32 and faces to the upper end of the interference cylinder 70 along the axial direction (vertical direction) of the inner pipe 28.

Therefore, when the inner pipe 28 is about to slide downward due to a load against the urging force of the compression coil spring 52 applied from above in this state, the portion of the interference piece 78 protruding outward with respect to the flange 32 abuts the upper end of the interference cylinder 70. Due to this, the inner pipe 28 is restricted from sliding down.

Meanwhile, the other end of the lock piece 76 with respect to its rotation center is formed to be a release piece 80. When the lock piece 76 rotates in the lock direction in the state in which the inner pipe 28 protrudes upward relative to the outer pipe 16, the release piece 80 partially projects inward with respect to the inner pipe 28 so that it faces to the lower end of the control pipe 34 in the axial direction (vertical direction) of the inner pipe 28.

As shown in Fig. 2, the release piece 80 is formed with a slant surface 82 in a portion projecting inward of the inner pipe 28. The slant surface 82 inclines upwardly, i.e., toward radially inward direction with respect to the inner pipe 28 relative to the direction of the control pipe 34 toward the lower end. Consequently, when the lower end of the descending the control pipe 34 abuts and pushes the slant surface 82, the release piece 80 displaces in radially outward direction of the inner pipe 28.

### (Configuration of Drive Control Unit 14)

Now explanation is made on the drive control unit 14 of the slide actuator 10.

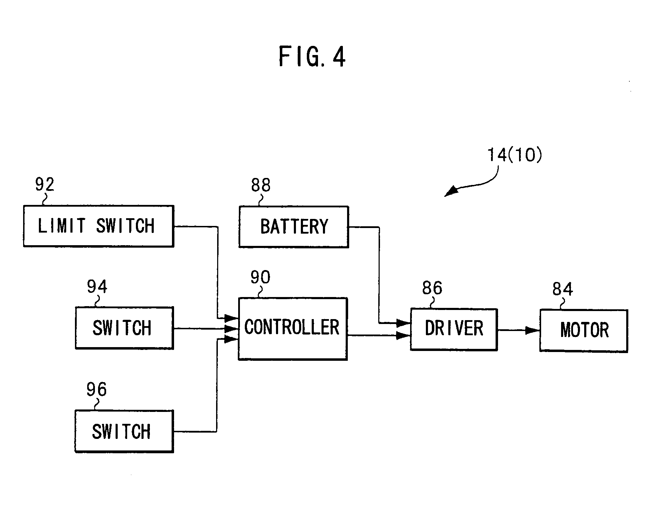

As shown in Fig. 1, the drive control unit 14 has a motor 84. As shown in the block diagram of Fig. 4, the motor 84 is electrically connected to a battery 88 via a driver 86. The driver 86 is electrically connected to a controller 90 so that it controls power supply to the motor 84 based on a drive control signal outputted from the controller 90.

The controller 90 is electrically connected with a limit switch 92. The limit switch 92 is provided in the vicinity of the lock plate 54. When the lock claw 58 enters the lock hole 64, power supply to the limit switch 92 is canceled (turned OFF). When the lock plate 54 swings to a degree that the lock claw 58 exits the lock hole 64, power is supplied to the limit switch 92 (turned ON). The state of the power supply to the limit switch 92 is input as an electric signal to the controller 90.

Further, the controller 90 is electrically connected with a switch 94 and a switch 96 so that the power-supply state of the switches 94, 96 can be inputted as electric signals to the controller 90. Incidentally, when the present actuator 10 is applied to an apparatus that raises a vehicular engine hood in a given amount or causes a movable bumper to protrude toward the front of the vehicle in a given stroke when the distance to an obstacle existing in front of the vehicle is smaller than a given value, the switch 94 can be replaced with a ranging sensor (or a forward monitoring instrument) or the like that detects a distance to the frontward obstacle of the vehicle.

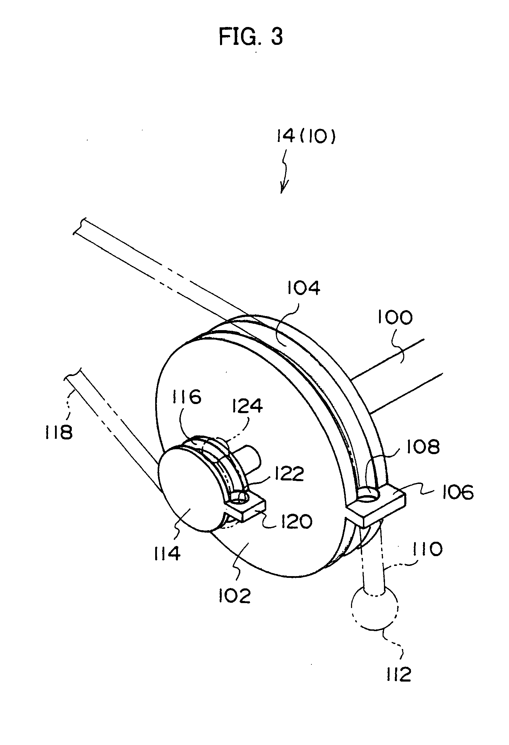

On the other hand, as shown in Fig. 1, the motor 84 has an output shaft which is mechanically coupled to a take-up shaft 100 via a speed-reduction mechanism, such as a speed-reduction gear, which is not shown in Fig. 1. As shown in Fig. 3, to the take-up shaft 100, a take-up pulley 102 is coupled coaxially to and integrally therewith which serves as a rotary member forming a first tow member.

A guide groove 104 is formed uniformly in an outer periphery of the take-up pulley 102. An outer peripheral length of the take-up pulley 102, at a portion of the guide groove 104, is set to be sufficiently greater than the full stroke length of the inner pipe 28 and the control pipe 34 when they protrudes upper with respect to the outer pipe 16 from a state in which they are received in the outer pipe 16.

Further, the take-up pulley 102 is provided with a holding piece 106. The holding piece 106 is a plate-shaped member having its thickness in a circumferential direction of the take-up pulley 102, and a main body thereof protrudes outward with respect to the outer periphery of the take-up pulley 102.

A through-hole 108 is formed in the holding piece 106 in a thickness direction thereof, and one end in the lengthwise of a wire 110, as a first coupling member, passes through the through-hole 108. At the lengthwise one end of the wire 110, a stopper 112 is integrally provided with the wire 110.

The stopper 112 is configured such that its outer peripheral form is sufficiently greater than the inner peripheral form of the through-hole 108, so that the stopper 112 cannot pass through the through-hole 108. On the other hand, as shown in Fig. 5, the lengthwise other end of the wire 110 enters into the interior of the control pipe 34 while passing through the bottom lid 18 and the interior of the support cylinder 42.

Furthermore, the lengthwise other end of the wire 110 is engaged to the bottom of the cylindrical member 38 formed in the control pipe 34. Therefore, when the take-up pulley 102 rotates in the forward direction, which is one of the directions about the take-up shaft 100, the holding piece 106 pulls the stopper 112, and the take-up pulley 102 winds up the wire 110, the control pipe 34 is pulled and move down.

On the other hand, as shown in Fig. 3, at a side of the take-up pulley 102 in the axial direction thereof, a take-up pulley 114 serving as a rotary member and constituting a second tow member is coupled coaxially to and integrally with the take-up shaft 100.

The take-up pulley 114 is smaller in a diameter than the take-up pulley 102. A guide groove 116 is formed uniformly in an outer periphery of the take-up pulley 114. A wire 118, serving as a second coupling member, is wound around in the guide groove 116 in a direction opposite to the winding direction of the wire 110 in the guide groove 104 of the take-up pulley 102.

Further, the take-up pulley 114 is provided with a holding piece 120 similar to the holding piece 106. The holding piece 120 is a plate-shaped member having its thickness in a circumferential direction of the take-up pulley 114, and a main part thereof protrudes outward with respect to the outer periphery of the take-up pulley 114. A through-hole 122 formed in the holding piece 120 in a thickness direction thereof. The lengthwise one end of the wire 118 passes through the through-hole 112 in a direction opposite to the passage direction of the wire 110 through the through-hole 108.

A stopper 124 is integrally provided with the wire 118 at the lengthwise one end of the wire 118. The stopper 124 is configured such that its outer peripheral form is sufficiently greater than the inner peripheral form of the through-hole 122 so that the stopper 124 cannot pass through the through-hole 122. Meanwhile, as shown in Fig. 5, the lengthwise other end of the wire 118 enters inside of the support cylinder 42 while passing through the bottom lid 18.

Furthermore, the lengthwise other end of the wire 118 is engaged to the lock plate 54 at a side opposite to the lock claw 58 relative with the shaft 56. Therefore, when the take-up pulley 114 rotates reversely, i.e., in the other one of the directions about the take-up shaft 100, the holding piece 120 pulls the stopper 124 and hence the take-up pulley 114 winds up the wire 118, the wire 118 causes the lock plate 54 to rotate, about the shaft 56, in radially inward direction with respect to the support cylinder 42, against the urging force of the urging member which is urging the lock plate 54.

### <Operation and Effect of First Embodiment>

Now explanation of the operation and effect of the present embodiment will be made by a description of an operation of the slide actuator 10.

Before operation of the slide actuator 10, i.e., in a standby state, the inner pipe 28 and the control pipe 34 are received in the outer pipe 16 as shown in Fig. 5, and the inner pipe 28 is held by the lock claw 58 which passes through the lock hole 64.

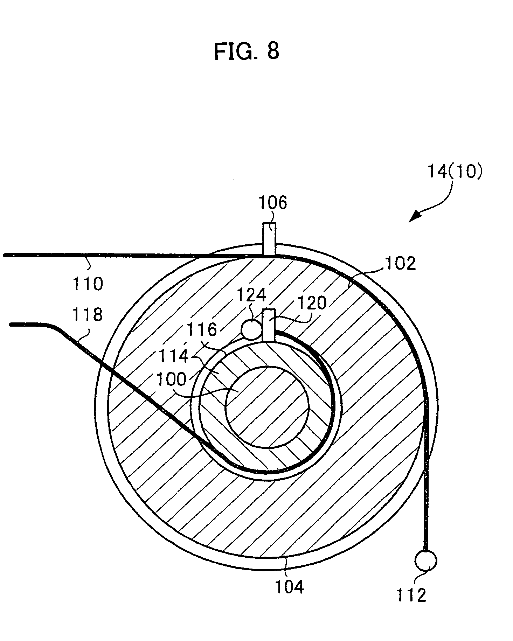

Further, in this state, the take-up shaft 100 and the take-up pulleys 102, 104 are in reference positions as shown in Fig. 8. The length of the wire 110 from the through-hole 108 of the holding piece 106 to the stopper 112, is equal to or greater than the full stroke of the control pipe 34 by which the control pipe 34 received in the outer pipe 16 protrudes upward of the outer pipe 16.

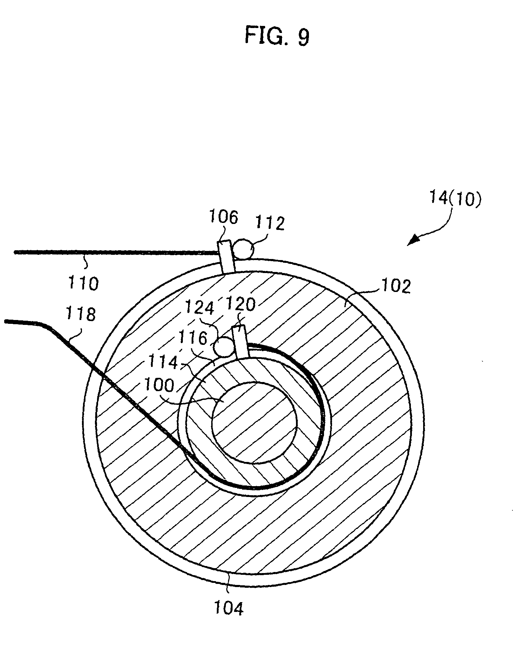

In this state, when the switch 94 is operated, the controller 90 outputs a reverse-rotation drive signal to the driver 86. When the reverse-rotation drive signal is inputted, the driver 86 places the motor 84 being supplied with power and causes the motor 84 to rotate reverse. By the reverse rotation of the motor 84, the take-up shaft 100 and as well as the take-up pulleys 102, 114 rotate reversely (in counterclockwise direction in Fig. 9), as shown in Fig. 9. Due to this, the holding piece 120 pulls the stopper 124 so that the take-up pulley 114 pulls and winds up the wire 118 against the urging force of the urging member which is urging the lock plate 54.

When the wire 118 is pulled in this manner, the lock plate 54 is rotated in radially inward direction of the support cylinder 42 about the shaft 56, and thereby, the lock claw 58 exits the lock hole 64.

By the removal of the lock claw 58 from the lock hole 64, the inner pipe 28 and the control pipe 34 are disengaged from the lock claw 58 and slide upward of the outer pipe 16 due to the urging force of the compressed coil spring 52 until the flange 32 of the inner pipe 28 abuts with the fixed stopper 20, as shown in Fig. 6. Furthermore, by the disengagement of the lock claw 58 from the lock hole 64, the limit switch is placed in a state being supplied with power.

Further, due to this sliding of the control pipe 34, the wire 110 moves and the stopper 112 approaches the holding piece 106 as shown in Fig. 9. Furthermore, when the inner pipe 28 moves upward of the outer pipe 16 until the flange 32 abuts the fixed stopper 20, an interference of the guide pipe 68 and the interference cylinder 70 with respect to the interference piece 78 of the lock piece 76 is eliminated.

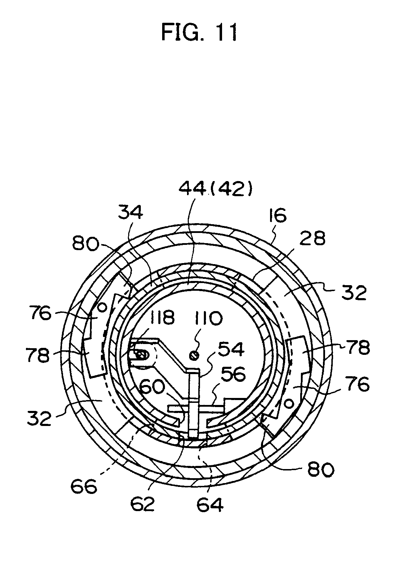

Thereby, the lock piece 76 is rotated from the state shown in Fig. 11 in the lock direction by the urging force of the urging member, and the interference piece 78 protrudes outward of the flange 32 as shown in Fig. 12.

In this state, when a load acts upon the upper end of the inner pipe 28, the interference piece 78 interferes with the upper end of the interference cylinder 70. Because the interference cylinder 70 is restricted from descending due to the interference of the interference portion 74 with the outer pipe 16, descending of the interference piece 78 is also restricted, and therefore descending of the inner pipe 28 is restricted.

Therefore, the inner pipe 28 basically does not descend even if a load acts to the upper end of the inner pipe 28. However, when the load acting to the upper end of the inner pipe 28 exceeds a given magnitude, the inner pipe 28 descends until it abuts with the upper end of the guide pipe 68, while a portion of the inner periphery of the outer pipe 16 lower than the thin-wall portion 72 being elastically deformed due to interference portion 74.

Consequently, when the load acting on the upper end of the inner pipe 28 exceeds the given magnitude, the inner pipe 28 descends and the impact of the load applied to the upper end of the inner pipe 28 is absorbed by the elastically deformation of the inner periphery of the outer pipe 16.

Accordingly, when the present actuator 10 is applied to an apparatus, for example, that raises a vehicular engine hood in a given amount or causes a movable bumper to protrude toward the front of the vehicle in a given stroke in the case where the distance to an obstacle existing in front of the vehicle is smaller than a given value as described above, impact of a collision of the obstacle with the engine hood which is raised up or with the movable bumper protruded toward the front of the vehicle, is relieved.

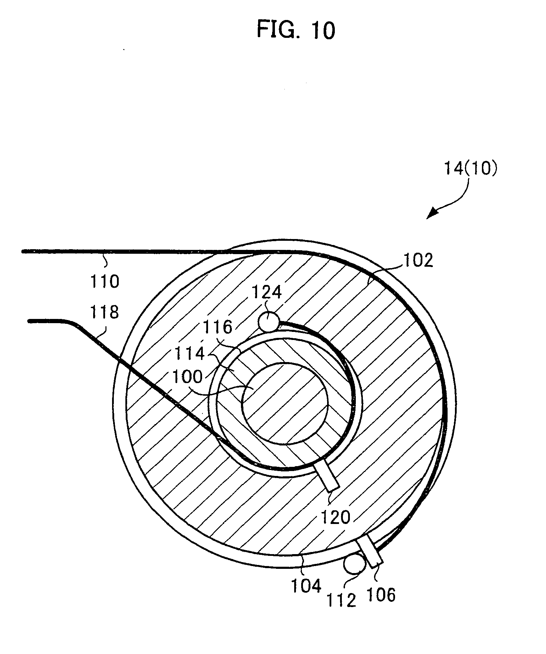

On the other hand, when the switch 96 is operated in a state in which the inner pipe 28 protrudes from the outer pipe 16 as described above, the controller 90 outputs a forward rotating signal to the driver 86. When the forward rotating signal is inputted, the driver 86 places the motor 84 to being supplied with power and causes the motor 84 to rotate forward. By the forward rotation of the motor 84, the take-up shaft 100 as well as the take-up pulleys 102, 114 rotate forwardly (in clockwise direction in Fig. 10).

Due to the forward rotation of the take-up pulley 102, the stopper 112 is pulled by the holding piece 106 so that the take-up pulley 102 pulls and winds up the wire 110 against the urging force of the compression coil spring 52. Due to this, the control pipe 34 descends.

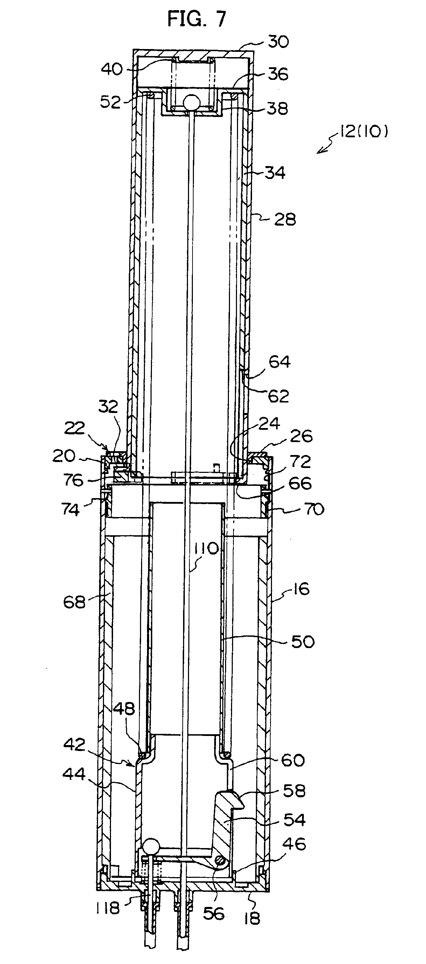

Here, in the initial stage of the descending of the control pipe 34 due to pulling of the wire 110, the inner pipe 28 does not descend as shown in Fig. 7 since the inner pipe 28 is urged upward due to the urging force of the compression coil spring 40 even if the control pipe 34 descends..

Thus, when only the control pipe 34 first descends, the lower end of the control pipe 34 pushes the slant surface 82 formed at the release piece 80 of the lock piece 76. Due to the slant surface 82 pushed by the lower end of the control pipe 34, the lock piece 76 rotates in a direction to displace the release piece 80 in radially inward direction of the inner pipe 28, against the urging force of the urging member urging the lock piece 76.

When the lock piece 76 thus rotates, the interference piece 78 rotates in radially inward direction of the inner pipe 28, so that the opposing (interfering) state of the interference piece 78 and the upper end of the interference cylinder 70 is eliminated.

Then, when the compression coil spring 40 expands to its fullest extent, the inner pipe 28 descends together with the control pipe 34. Further, when the take-up pulley 102 pulls and winds up the wire 110, as shown in Fig. 10, and the descending control pipe 34 reaches a state in which its lower end is just short of abutment with the bottom lid 18, the abutment portion 66 of the inner pipe 28 abuts the slant surface at the upper end of the lock claw 58.

When the inner pipe 28 further descends in this state, the lock claw 58 pushed by the abutment portion 66 and the further the lock plate 54 rotate in the inward direction of the support cylinder 42 against the urging force of the urging member.
The rotation of the lock plate 54 places the limit switch 92 into a state being supply with power.

Further, when the inner pipe 28 descends until the inner pipe 28 is received in the outer pipe 16 as shown in Fig. 5, the lock claw 58 faces to the lock hole 64, the lock plate 54 is rotated due to the urging force of the urging member urging the lock plate 54, the lock claw 58 enters the lock hole 64, and the inner pipe 28 is held again by the lock claw 58.

Meanwhile, when the lock plate 54 rotates so that the lock claw 58 enters the lock hole 64, the limit switch 92 which is once placed in a power-supply state is again turned into cancellation of power-supply state. The controller 90 causes the motor 84 to rotate reversely depending upon the power-supply cancelled state of the limit switch 92.

Due to this, the take-up shaft 100 and the take-up pulleys 102, 114 rotate to the reference position as shown in Fig. 8. Thereby, the holding piece 106 separates away from the stopper 112, so that the length of wire 110 from the through-hole 108 of the holding piece 106 to the stopper 112 will be equal to or greater than the full stroke of the control pipe 34.

Accordingly, as described above, in this state, the inner pipe 28 can be slid upward due to the urging force of the compression coil spring 52 by simply reversely rotating the take-up pulley 114 to rotate the lock plate 54 and releasing the inner pipe 28 from being held by the lock claw 58.

Further, when the inner pipe 28 is released from being held by the lock claw 58, there is no need to cancel the mechanical coupling between the take-up shaft 100 and the motor 84. Therefore, there is no need to provide a clutch mechanism between the take-up shaft 100 and the motor 84.

This can simplify the structure of the drive-force transmission mechanism between the motor 84 and the take-up shaft 100. As a result, the drive-force transmission mechanism can be reduced in size and weight, and hence a cost thereof can be greatly reduced.

Further, the wires 110, 118 may be configured to be pulled in a straight-line form. However, such a structure requires provision of, for example, a sliding space in which the stopper 112 can be pulled to the same length as that of the full stroke by which the inner pipe 28 protruding from the outer pipe 16 is received in the outer pipe 16.

In contrast, the present embodiment is structured so that the take-up pulley 102, 114 wind up the wire 110, 118 while pulling it. This only requires a space for rotating the take-up pulley 102, which also reduces the size of the overall apparatus.

### <Configuration of the Second Embodiment>

Next, an explanation is given on a second embodiment according to the present invention. Incidentally, in explaining the present embodiment, same reference numerals are attached to the elements same as the first embodiment, and the detailed explanation thereof is omitted.

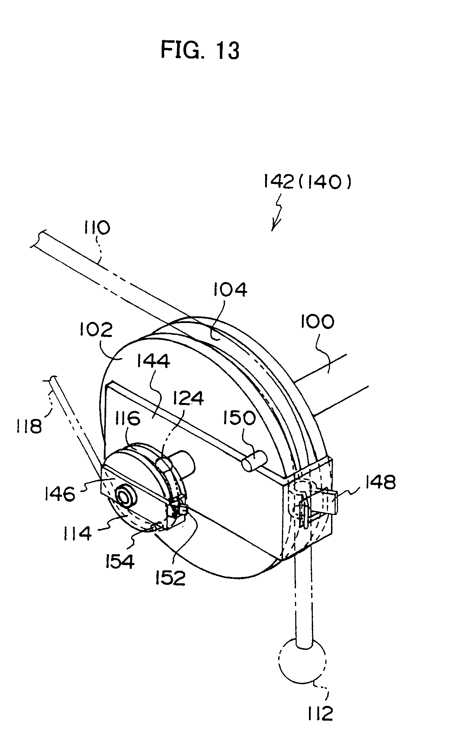

Fig. 13 shows a perspective view of a structure of an essential-part of a drive control unit 142 of a slide actuator 140 according to the second embodiment of the invention.

As shown in this figure, the holding pieces 106, 120 are not provided for the take-up pulley 102, 114, which constitutes the drive control unit 142 of the slide actuator 140. Instead, there are provided, as engagement members, a holding plate 144 on an axial one side of the take-up pulley 102 and a holding plate 146 on an axial one side of the take-up pulley 114.

Each of the holding plates 114, 146 is formed in a plate form having its length direction along the radial direction of the take-up pulley 102, 114 and its thickness direction along the axial direction of the take-up shaft 100, so as to being rotatably supported by the take-up shaft 100. One end of the holding plate 144 in its longitudinal direction is bent around the width direction thereof to have a hook form, and is facing the outer periphery of the take-up pulley 102 in the rotational (circumferential) direction of the take-up pulley 102.

An engagement piece 148 is attached to the portion of the holding plate 144 which is facing the outer periphery of the take-up pulley 102. The engagement piece 148 is formed in a non-perfect annular form which is partially discontinuous, and both ends thereof are fixed to the holding plate 144.

The annular portion of the engagement piece 148 has an inner diameter set in a range of size that the wire 110 can pass through but the stopper 112 cannot pass through, and the wire 110 passes through the annular portion similarly to the through-hole 108 of the holding piece 106 of the first embodiment.

Further, in the present embodiment, a pin 150 is formed so as to projecting from one surface of the take-up pulley 102 in the axial direction thereof. In the reference position, the pin 150 contacts the holding plate 144 at the reverse side in the rotation direction of the take-up pulley 102.

On the other hand, one end of the holding plate 146 in its longitudinal direction is bent around its width direction to have a hook form, so as to facing the outer periphery of the take-up pulley 114 in the rotational (circumferential) direction of the take-up pulley 114. An engagement piece 152 is attached to the holding plate 146 in a position facing the outer periphery of the take-up pulley 114.

The engagement piece 152 is formed in a non-perfect annular form which is partially discontinuous, so that both ends thereof are fixed on the holding plate 146. The annular portion of the engagement piece 152 has an inner set in a range of size that the wire 118 can pass through but the stopper 124 cannot pass through, and the wire 118 passes through the annular portion similarly to the through-hole 122 of the holding piece 120 of the first embodiment.

Meanwhile, in the present embodiment, a pin 154 is formed so as to projecting from one surface of the take-up pulley 114 in the axial direction thereof.
In the reference position, the pin 154 contacts the holding plate 146 at the forward side in rotation of the take-up pulley 114.

### <Operation and Effect of the Second Embodiment>

Next, an explanation is given for the operation and effect of the present embodiment.

In this embodiment, when the take-up shaft 100 as well as the take-up pulley 102 rotates forward under the forward-rotation drive force of the motor 84 from the state the take-up pulleys 102, 114 are in the reference position, the pin 150 pushes the holding plate 144 forward and causes the holding plate 144 to rotate forward together with the take-up pulley 102.

In this state, if the inner pipe 28 and the control pipe 34 have been protruded from the outer pipe 16, the stopper 112 is pulled by the engagement piece 148, and the wire 110 is pulled and wound around in the guide groove 104 of the take-up pulley 102.

When the inner pipe 28 is received in the outer pipe 16 and the motor 84 rotates reversely, the take-up pulley 102 rotates reversely. Here, because the holding plate 144 is rotatably supported on the take-up shaft 100, the holding plate 144 does not rotate even if the take-up pulley 102 rotates reversely.

Consequently, the engagement piece 148 is maintained in a state interfering with the stopper 112, while the wire 110 is maintained in a state wound around the take-up pulley 102. Due to this, when the inner pipe 28 slides upward, the wire 110 can smoothly move along the guide groove 104 together with the holding plate 144 without being interfered with an edge or the like of the guide groove 104.

Meanwhile, when the take-up pulley 114 rotates forward from the reference position, the holding plate 146 exhibits similar operations to that of the holding plate 144. Therefore, when the lock plate 54 rotates, the wire 118 can smoothly move along the guide groove 116 together with the holding plate 146 without being interfered with an edge or the like of the guide groove 116.

### DESCRIPTION OF REFERENCE NUMERALS AND SIGNS

- 10: Slide actuator
- 16: Outer pipe
- 28: Inner pipe (slide member)
- 52: Compression coil spring (urging member)
- 54: Lock plate (holding member)
- 84: Motor (drive section)
- 102: Take-up pulley (first tow member, rotary member)
- 110: Wire (first coupling member)
- 114: Take-up pulley (second tow member, rotary member)
- 118: Wire (second coupling member)
- 140: Slide actuator
- 144: Holding plate (engagement member)
- 146: Holding plate (engagement member)

## Claims

1. A slide actuator comprising:
an outer pipe having a hollow cylindrical form opened at one end;
a slide member received in the outer pipe and slidable toward the opening of the outer pipe;
an urging member urging the slide member toward the opening of the outer pipe in a state in which the slide member is received in the outer pipe;
a holding member that holds the slide member against an urging force of the urging member, by being directly or indirectly engaged with the slide member received in the outer pipe;
a first coupling member having one end directly or indirectly coupled to the slide member, and that moves together with the slide member when the slide member slides toward the opening of the outer pipe;
a first tow member provided so as to be movable in first and second directions including forward and reverse directions, the first tow member moving in the first direction while engaged with the first coupling member to move, by pulling, the first coupling member toward the other end thereof, and moving in the second direction while the slide member is held by the holding member to allow the first coupling member to move toward the one end thereof by a distance at least corresponding to a movement amount of the first tow member; and
a drive section that is configured to be driven forward and in reverse and that is mechanically coupled to the first tow member, to apply a forward drive force and a reverse drive force to the first tow member.

2. The slide actuator of claim 1, comprising:
a second coupling member having one end directly or indirectly coupled to the holding member, and that moves toward the other end thereof to move the holding member in a direction toward release of the slide member from being held by the holding member, and
a second tow member mechanically coupled to the drive section and movable in first and second directions including forward and reverse directions by a drive force of the drive section, the second tow member moving in the first direction while engaged with the second coupling member to move, by pulling, the second coupling member toward the other end thereof, and moves in the second direction while the slide member is held by the holding member to allow the second coupling member to move toward the one end thereof by a distance at least corresponding to a movement amount of the second tow member.

3. The slide actuator of claim 1 or 2, wherein at least one of the first tow member and the second tow member comprises a rotary member that is rotatable about a predetermined axis and rotates both forward and in reverse due to the drive force of the drive section, and
the first or second coupling member, corresponding to whichever of the first and second tow members comprises the rotary member, is formed in an elongate form having flexibility, and the rotary member winds up, by pulling, the first or second coupling member by rotation of the rotary member in the first direction.

4. The slide actuator of claim 3, further comprising an engagement member that is relatively rotatable coaxially to the rotary member and is configured to engage with the first or second coupling member at a side of an outer periphery of the rotary member, the engagement member rotating by being pushed by the rotary member due to the rotation of the rotary member in the first direction, running idle when the rotary member rotates in the second direction, and being allowed to rotate in the second direction in accordance with a rotation amount of the rotary member in the second direction.

5. The slide actuator of claim 3 or 4, wherein the rotary member comprised in the second tow member is coupled coaxially to and integrally with the rotary member comprised in the first tow member.
